# EUROPÄISCHE PATENTSCHRIFT

(11) **EP 2 144 036 B1**
(45) Veröffentlichungstag und Bekanntmachung des Hinweises auf die Patenterteilung: **05.09.2018**
(21) Anmeldenummer: 09008467.4
(22) Anmeldetag: 29.06.2009
(51) Int. Cl.: G01B 11/245, G01B 11/25, G01B 11/03, G06T 7/00, G06T 7/593

(54) **Verfahren und Vorrichtung zur 3D-Digitalisierung eines Objekts**
Method and device for 3D digitalisation of an object
Procédé et dispositif destinés à la numérisation en 3D d'un objet

(30) Priorität: 07.07.2008 DE 102008031942
(43) Veröffentlichungstag der Anmeldung: 13.01.2010
(73) Patentinhaber: Carl Zeiss Optotechnik GmbH, 83115 Neubeuern (DE)
(72) Erfinder: Frey, Alexander, 83233 Bernau (DE); Kreutzer, Daniel, 83059 Kolbermoor (DE); Mayer, Thomas, 83059 Kolbermoor (DE); Steinbichler, Marcus Dr., 83115 Neubeuern (DE)
(74) Vertreter: Zinnecker, Armin

(56) Entgegenhaltungen:
- EP-A2- 1 574 818
- WO-A1-2006/094409
- JP-A- 2000 194 863
- US-A1- 2007 263 924
- US-A1- 2008 144 925

## Beschreibung

Die Erfindung betrifft ein Verfahren zur 3D-Digitalisierung eines Objekts, bei dem zur Ermittlung der 3D-Koordinaten des Objekts mehrere Kamerabilder des Objekts aufgenommen und zusammengesetzt werden.

Bei der 3D-Digitalisierung von Objekten ist es oftmals erforderlich, mehrere Kamerabilder des Objekts aufzunehmen. Benachbarte Kamerabilder überlappen sich. Sie können dann zusammengesetzt werden, insbesondere durch ein Matching-Verfahren.

Aus der US 2007/263924 A1 ist ein Verfahren zum Nachverfolgen des dynamischen Bildes eines Objekts bekannt.

Die JP 2000 194863 A offenbart ein Verfahren, bei dem ein zweidimensionaler Koordinatenpunkt nachverfolgt wird.

Die US 2008/144925 A1 offenbart ein Odometrie-Verfahren, das im Rahmen eines Navigationssystem verwendet werden kann und bei dem Feature-Punkte nachverfolgt werden, um daraus eine "Pose" zu berechnen.

Die EP 1 574 818 A2 offenbart ein Vefahren zum Vermessen eines Objekts, bei dem CD-Daten und Feature-Punkte zur Registrierung von Meßdaten verwendet werden.

Aus der WO 2006/094409 A1 ist ein Verfahren nach dem Oberbegriff des Anspruchs 1 bekannt.

Aufgabe der Erfindung ist es, ein Verfahren der eingangs angegebenen Art zur 3D-Digitalisierung eines Objekts zu verbessern.

Erfindungsgemäß wird diese Aufgabe durch die Merkmale der Ansprüche 1 und 6 gelöst.

Es werden mehrere Kamerabilder des Objekts aufgenommen. Dabei handelt es sich um Kamerabilder, die zur Ermittlung der 3D-Koordinaten des Objekts geeignet sind. Insbesondere ist es möglich, das Verfahren der Streifenprojektion, insbesondere der Weißlicht-Streifenprojektion, anzuwenden. Es ist aber auch möglich, ein Laserscanner-Verfahren anzuwenden oder ein sonstiges Verfahren, mit dem die 3D-Digitalisierung des Objekts möglich ist. Für die Durchführung der Erfindung sind insbesondere kamerabasierte Verfahren geeignet, bei denen mit einer Kamera 3D-Ansichten des Objekts aufgenommen werden.

Eine Vorrichtung zur Durchführung des Verfahrens fasst einen Projektor und eine oder mehrere Kameras um. Der Projektor und die eine oder mehreren Kameras können zu einem 3D-Sensor zusammengefaßt sein. Der Projektor ist dazu geeignet, ein Lichtmuster auf das Objekt zu projizieren, insbesondere ein Streifenmuster, insbesondere Weißlicht-Streifen.

Von der oder den Kameras können mehrere Kamerabilder des Objekts aufgenommen werden. Die Kamerabilder werden aus verschiedenen Perspektiven (Ansichten, Blickwinkeln) aufgenommen. Von den Kamerabildern werden verschiedene Bereiche des Objekts erfaßt, die sich im allgemeinen teilweise überlappen. Die verschiedenen Kamerabilder können zusammengesetzt werden, insbesondere durch ein 3D-Matching-Verfahren. Auf diese Weise kann ein größerer Bereich des Objekts oder die gesamte Oberfläche des Objekts erfaßt werden.

Wenn das Objekt eine ausreichende 3D-Struktur aufweist, ist es möglich, einzelne sich überlappende Kamerabilder durch ein 3D-Matching-Verfahren zueinander auszurichten. Dieses Matching erfordert jedoch bei vorbekannten Lösungen eine zusätzliche manuelle Interaktion im Meßablauf, da korrespondierende 3D-Punkte in den verschiedenen Kamerabildern manuell in den Datensätzen markiert werden müssen. Dies führt zu einem zusätzlichen Interaktionsaufwand und vermindert die Effizienz der 3D-Digitalisierung des Objekts.

Gemäß der Erfindung werden von dem Objekt Aufnahmen gemacht. Aus diesen Aufnahmen werden 2D-Feature-Punkte des Objekts bestimmt. Als 2D-Feature-Punkte können insbesondere Ecken des Objekts verwendet werden, also Schnittpunkte von zwei oder mehr Kanten des Objekts. Es ist allerdings auch möglich, als 2D-Feature-Punkte andere Punkte in der Aufnahme zu verwenden, die eine charakteristische Umgebung haben. Die 2D-Feature-Punkte können selbsttätig bestimmt werden, also ohne manuelle, menschliche Interaktion.

Für jeden 2D-Feature-Punkt kann ein Merkmalsvektor bestimmt werden. Der Merkmalsvektor kann die charakteristischen Eigenschaften in der Umgebung des 2D-Feature-Punkts beinhalten. Es ist möglich, einen Merkmalsvektor zu verwenden, der invariant gegenüber bestimmten Transformationen ist, beispielsweise invariant gegenüber einer Translation. Insbesondere kann als Merkmalsvektor das Gradientenhistogramm der Nachbarschaft des 2D-Feature-Punkts in der Aufnahme verwendet werden, also das Gradientenhistogramm der 2D-Nachbarschaft des 2D-Feature-Punkts.

Anschließend werden die 3D-Koordinaten der 2D-Feature-Punkte einer Aufnahme bestimmt. Dies kann auf der Grundlage von einem oder mehreren Kamerabildern des Objekts in Verbindung mit dem oder den Projektionsmustern (Lichtmuster, Streifenmuster, Weißlicht-Streifenmuster, Laserlicht-Muster, eine oder mehrere Laserlinien etc.) erfolgen. Insbesondere kann ein Kamerabild verwendet werden, das aus derselben Perspektive aufgenommen worden ist. Bei der Verwendung der Weißlicht-Streifenprojektion zur Ermittlung der 3D-Koordinaten des Objekts kann beispielsweise zunächst ein Kamerabild des Objekts mit einem Weißlicht-Streifenmuster aufgenommen werden. Anschließend oder vorher wird eine Aufnahme ohne Weißlicht-Streifen gemacht, aus der die 2D-Feature-Punkte bestimmt werden können.

Zwischen den 2D-Feature-Punkten einer Aufnahme und den 2D-Feature-Punkten einer anderen Aufnahme werden die 2D-Punktkorrespondenzen bestimmt. Auf diese Weise kann geprüft werden, ob die 2D-Feature-Punkte einer Aufnahme korrespondierende 2D-Feature-Punkte in einer anderen Aufnahme aufweisen. Zur Bestimmung der 2D-Punktkorrespondenzen können Merkmalsvektoren verwendet werden. Insbesondere können Merkmalsvektoren verwendet werden, die aufgrund ihrer Definition (z.B. Gradientenhistogramm der 2D-Nachbarschaft) invariant gegenüber bestimmten Transformationen (z.B. Translation) sind. Aus dem Vergleich der Merkmalsvektoren können korrespondierende Merkmalsvektoren und damit korrespondierende 2D-Feature-Punkte bestimmt werden.

Anschließend werden mehrere der ermittelten 2D-Punktkorrespondenzen ausgewählt. Aus diesen ausgewählten 2D-Punktkorrespondenzen wird eine zugehörige 3D-Transformation bestimmt. Die Auswahl der 2D-Punktkorrespondenzen kann zufällig erfolgen. Vorteilhaft ist es, wenn drei Punktkorrespondenzen ausgewählt werden.

Da die 3D-Transformation auf 2D-Punktkorrespondenzen beruht, kann nicht mit Sicherheit davon ausgegangen werden, daß es sich um eine zutreffende, gültige 3D-Transformation handelt. Dementsprechend wird die Qualität der ermittelten 3D-Transformation bestimmt. Dies geschieht anhand der transformierten 3D-Koordinaten der 2D-Feature-Punkte. Die 3D-Koordinaten der 2D-Feature-Punkte werden aus Kamerabildern des Objekts, die zur Ermittlung der 3D-Koordinaten des Objekts dienen, bestimmt. Die Qualität der 3D-Transformation kann aus der Überlappungsqualität der 3D-Koordinaten der 2D-Feature-Punkte bestimmt werden, insbesondere aus den 3D-Klaffungen. Hierzu kann der Abstand von zugehörigen 3D-Koordinaten der 2D-Feature-Punkte berechnet werden. Stattdessen oder zusätzlich können die 3D-Nachbarschaften der 3D-Koordinaten der 2D-Feature-Punkte zur Bestimmung der Überlappungsqualität verwendet werden. Wenn der Abstand und/oder die 3D-Nachbarschaften bestimmte Qualitätskriterien erfüllen, insbesondere wenn der Abstand kleiner ist als ein bestimmter vorgegebener Abstand und/oder wenn die Abweichungen in den 3D-Nachbarschaften geringer sind als vorgegebene Abweichungen, kann die Qualität der 3D-Transformation als ausreichend angesehen werden.

Wenn diese Qualität der 3D-Transformation ausreichend ist, kann die 3D-Transformation als gültige 3D-Transformation angesehen werden, und die zugehörigen 3D-Koordinaten der 2D-Feature-Punkte können als gültige 3D-Feature-Punkte angesehen werden. Für die Zusammensetzung der Kamerabilder des Objekts können dann die 3D-Koordinaten der gültigen 3D-Feature-Punkte verwendet werden.

Andernfalls, wenn die Qualität der 3D-Transformation nicht ausreichend ist, kann das Verfahren ab dem Schritt der Auswahl mehrerer 2D-Punktkorrespondenzen wiederholt werden: Es können dann andere 2D-Punktkorrespondenzen ausgewählt werden und daraus eine zugehörige 3D-Transformation bestimmt werden, deren Qualität bestimmt werden kann. Dies kann mehrmals wiederholt werden, bis gültige 3D-Feature-Punkte ermittelt werden können.

Vorteilhafte Weiterbildungen des erfindungsgemäßen Verfahrens sind in den Unteransprüchen beschrieben.

Vorteilhaft ist es, wenn in jeder Aufnahme ein Objektbereich bestimmt wird und wenn 2D-Feature-Punkte innerhalb dieses Objektbereichs verwendet werden. Der Objektbereich der Aufnahme ist dabei derjenige Bereich, in dem ein Teil des Objekts abgebildet wird, nicht jedoch ein Teil des Hintergrunds. Dadurch, daß 2D-Feature-Punkte innerhalb des Objektsbereichs verwendet werden, ist gewährleistet, daß die daraus ermittelten 2D-Punktkorrespondenzen Feature-Punkte betreffen, die auf der Objektoberfläche liegen.

Der Objektbereich kann durch die Kamerabilder von dem Hintergrundbereich unterschieden werden. Insbesondere ist es möglich, die Kontrastbilder zu verwenden, die bei der Herstellung der Kamerabilder, die zur Ermittlung der 3D-Koordinaten des Objekts dienen, gewonnen werden. Diese Kontrastbilder beinhalten eine Aussage über die Meßdatenqualität der daraus ermittelten 3D-Koordinaten des Objekts und eine Aussage darüber, ob eine ermittelte 3D-Koordinate zu dem Objekt, also in den Objektbereich, gehört oder zum Hintergrund, also in den Hintergrundbereich. Hierdurch kann die Hintergrundsszene weitgehend ausmaskiert werden und erreicht werden, daß nur 2D-Feature-Punkte innerhalb des Objektsbereichs verwendet werden. Dies erlaubt eine schnellere und qualitativ bessere Bestimmung gültiger 3D-Transformationen. Ferner kann eine bessere Unabhängigkeit des Verfahrens von eventuell vorhandenen Störeinflüssen wie Umgebungsbeleuchtung und Szenenhintergrund erreicht werden.

Eine weitere vorteilhafte Weiterbildung ist dadurch gekennzeichnet, daß gespeicherte 2D-Feature-Punkte und/oder gespeicherte 3D-Feature-Punkte und/oder gespeicherte Merkmalsvektoren verwendet werden. Die 2D-Feature-Punkte und/oder die 3D-Feature-Punkte und/oder die Merkmalsvektoren können in einer Feature-Punkte-Liste gespeichert werden. Dies ist insbesondere dann vorteilhaft, wenn mehrere gleiche Objekte digitalisiert werden sollen. Dann kann die komplette Feature-Punkt-Liste der ersten vollständigen 3D-Digitalisierung gespeichert und als komplette Feature-Punkt-Liste für die nachfolgenden Messungen verwendet werden. Hierdurch ist es dann möglich, alle nachfolgend gemessenen Objekte aus beliebigen Ansichtswinkeln in beliebiger Reihenfolge zu digitalisieren. Eine Einschränkung der Variation der Perspektiven (Ansichtswinkel) zu den vorherigen Perspektiven (Ansichtswinkeln) ist dann nicht mehr gegeben.

Eine Vorrichtung zur Durchführung eines Verfahrens zur 3D-Digitalisierung eines Objekts umfaßt einen Projektor zum Projizieren eines Lichtmusters oder eines Laserlicht-Musters auf das Objekt, eine oder mehrere Kameras zur Aufnahme von Kamerabildern des Objekts, eine Einrichtung zum Zusammensetzen der Kamerabi-Ider des Objekts und zum Ermitteln der 3D-Koordinaten des Objekts, eine Kamera zum Herstellen von Aufnahmen des Objekts und eine Einrichtung zum Bestimmen von 2D-Feature-Punkten des Objekts, zum Bestimmen der 3D-Koordinaten der 2D-Feature-Punkte des Objekts, zum Bestimmen der 2D-Punktkorrespondenzen zwischen den 2D-Feature-Punkten einer Aufnahme und den 2D-Feature-Punkten einer anderen Aufnahme, zum Auswählen mehrerer dieser 2D-Punktkorrespondenzen, zum Bestimmen einer zugehörigen 3D-Trans-formation, zum Bestimmen der Qualität dieser 3D-Transformation anhand der transformierten 3D-Koordinaten der 2D-Feature-Punkte und zum Ermitteln gültiger 3D-Feature-Punkte. Die Einrichtung ist auch zur Ermittlung der 3D-Koordinaten des Objekts Kamerabilder mit einem Lichtmuster aufzunehmen, und zur Ermittlung der 2D-Feature-Punkte des Objekts Aufnahmen ohne Lichtmuster zu machen, ausgebildet.

Vorteilhaft ist es, wenn die Vorrichtung eine Einrichtung aufweist, wobei die Einrichtung geeignet ist, in jeder Aufnahme einen Objektbereich zu bestimmen und 2D-Feature-Punkte innerhalb des Objektbereichs zu verwenden.

Die Vorrichtung kann einen Speicher zum Speichern der 2D-Feature-Punkte und/oder der 3D-Feature-Punkte und/oder der Merkmalsvektoren aufweisen.

Ein Ausführungsbeispiel der Erfindung wird nachstehend anhand der beigefügten Zeichnung im einzelnen erläutert. In der Zeichnung zeigt
- Fig. 1: eine Vorrichtung zur Durchführung eines Verfahrens zur 3D-Digitalisierung eines Objekts,
- Fig. 2: zwei Aufnahmen eines Objekts einschließlich der zugehörigen 2D-Feature-Punkte und
- Fig. 3A und 3B: ein Ablaufdiagramm des Verfahrens.

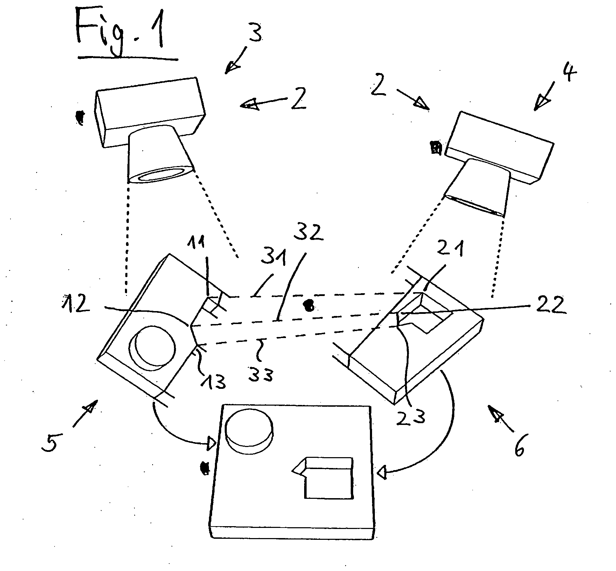

In Fig. 1 ist ein Ausführungsbeispiel einer Vorrichtung zur Durchführung eines Verfahrens zur 3D-Digitalisierung eines Objekts 1 dargestellt. Die Vorrichtung umfaßt einen Sensor 2, der eine Kamera und einen Weißlicht-Streifenprojektor umfaßt.

Bei der Durchführung des Verfahrens befindet sich der Sensor 2 zunächst in der mit 3 bezeichneten Stellung. In dieser Stellung wird ein erstes Kamerabild des Objekts 1 aufgenommen. Bei der Aufnahme dieses Kamerabilds wird das Objekt 1 mit Weißlicht-Streifen bestrahlt. Das Kamerabild dient dazu, die 3D-Koordinaten des Objekts 1 zu bestimmen. Hierfür können verschiedene Verfahren angewendet werden. Insbesondere kann das räumliche Phasenshift-Verfahren angewendet werden, bei dem die 3D-Koordinaten des Objekts 1 aus einem einzigen Kamerabild ermittelt werden können. Es ist allerdings auch möglich, das zeitliche Phasenshift-Verfahren anzuwenden, bei dem zur Ermittlung der 3D-Koordinaten des Objekts 1 mehrere, insbesondere drei oder vier, Kamerabilder aufgenommen werden.

Ferner wird von dem Objekt 1 mit der Kamera des Sensors 2 eine Aufnahme 5 gemacht, während sich der Sensor 2 in derselben Stellung befindet. Bei dieser Aufnahme wird das Objekt 1 nicht mit Weißlicht-Streifen beleuchtet.

Anschließend wird der Sensor 2 in eine andere Position gebracht, die in Fig. 1 mit dem Bezugszeichen 4 versehen ist. In dieser Position wird ein weiteres Kamerabild des Objekts 1 aufgenommen, aus dem die 3D-Koordinaten des Objekts 1 ermittelt werden. Bei der Aufnahme dieses Kamerabilds werden auf das Objekt 1 vom Projektor des Sensors 2 Weißlicht-Streifen projiziert. Wie erwähnt können die 3D-Koordinaten des Objekts durch ein Kamerabild ermittelt werden. Es ist allerdings auch möglich, mehrere Kamerabilder des Objekts 1 aufzunehmen, insbesondere bei der Anwendung eines zeitlichen Phasenshift-Verfahrens, und daraus die 3D-Koordinaten des Objekts 1 zu ermitteln. Während sich der Sensor 2 in der Stellung 4 befindet, wird von dem Objekt 1 eine Aufnahme 6 gemacht, während der auf das Objekt 1 keine Weißlicht-Streifen projiziert werden.

Das oder die Kamerabilder und die Aufnahme 5, die entstehen, wenn sich der Sensor 2 in der Stellung 3 befindet, erfassen den in Fig. 1 links dargestellten Bereich des Objekts 1. Wenn sich der Sensor in der Stellung 4 befindet, erfassen das oder die Kamerabilder und die Aufnahme 6 den rechten Bereich des Objekts 1. Diese Bereiche des Objekts 1 überlappen sich teilweise.

Aus den Aufnahmen 5, 6 des Objekts 1 werden 2D-Feature-Punkte bestimmt. Aus der linken Aufnahme 5 werden die Feature-Punkte 11, 12, 13 bestimmt. Diese Feature-Punkte liegen an Ecken des Objekts 1, also an Punkten, an denen sich jeweils zwei Kanten treffen.

Aus der Aufnahme 6, die den rechten Teil des Objekts 1 erfaßt, werden die 2D-Feature-Punkte 21, 22, 23 bestimmt. Auch diese 2D-Feature-Punkte liegen an Ecken des Objekts 1.

Anschließend werden die 3D-Koordinaten der 2D-Feature-Punkte 11, 12, 13; 21, 22, 23 bestimmt. Die Bestimmung der 3D-Koordinaten erfolgt aus den Kamerabildern des Objekts 1.

Ferner werden die 2D-Punktkorrespondenzen 31, 32, 33 zwischen den 2D-Feature-Punkten 11, 12, 13 der linken Aufnahme 5 und den 2D-Feature-Punkten 21, 22, 23 der rechten Aufnahme 6 bestimmt. Diese 2D-Punktkorrespondenzen 31, 32, 33 sind in Fig. 1 gestrichelt gezeichnet.

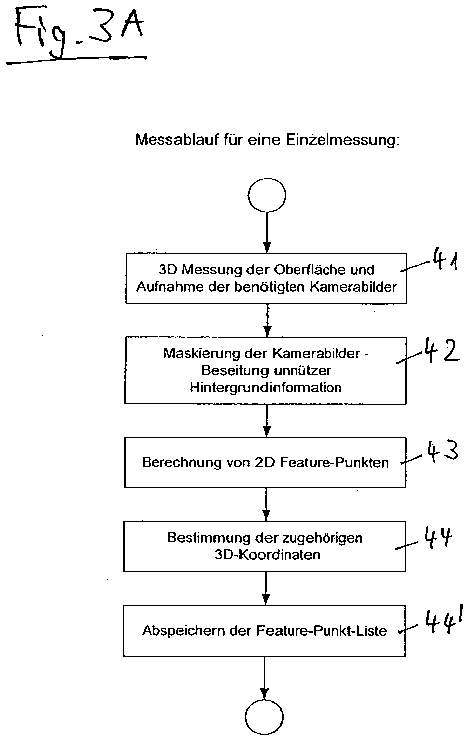

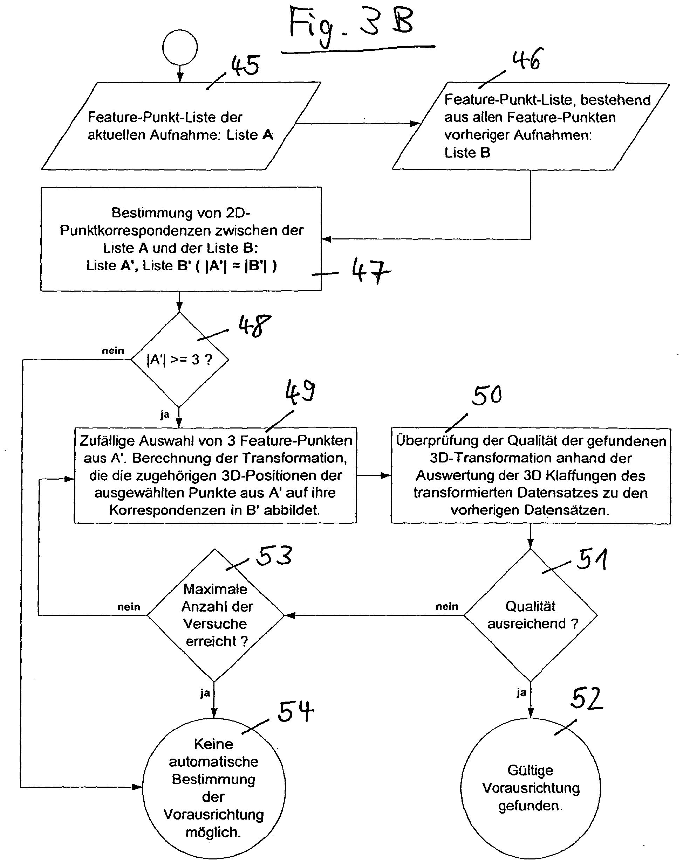

Anschließend werden mehrere dieser 2D-Punktkorrespondenzen 31, 32, 33 ausgewählt. Im Fall der Fig. 3 werden die drei 2D-Punktkorrespondenzen 31, 32, 33 ausgewählt. Aus diesen 2D-Punktkorrespondenzen wird eine zugehörige 3D-Transformation bestimmt.

Anschließend wird die Qualität dieser 3D-Transformation anhand der transformierten 3D-Koordinaten der 2D-Feature-Punkte bestimmt. Die 3D-Transformation wird also auf die 3D-Koordinaten der 2D-Feature-Punkte 11, 12, 13; 21, 22, 23 angewendet.

Aus der bestimmten Qualität der 3D-Transformation werden gültige 3D-Feature-Punkte ermittelt. In Fig. 1 handelt es sich bei der 3D-Transformation, die zu den 2D-Punktkorrespondenzen 31, 32, 33 gehört, um eine gültige 3D-Transformation, also um eine 3D-Transformtion, deren Qualität ausreichend ist. Aus dieser gültigen 3D-Transformation können gültige 3D-Feature-Punkte ermittelt werden.

Die 3D-Koordinaten der gültigen 3D-Feature-Punkte werden anschließend für die Zusammensetzung des linken und rechten Kamerabilds des Objekts 1 verwendet. Diese Zusammensetzung erfolgt durch ein 3D-Matching-Verfahren. Auf diese Weise kann das Objekts 1 korrekt zusammengesetzt werden, wie in Fig. 1 dargestellt.

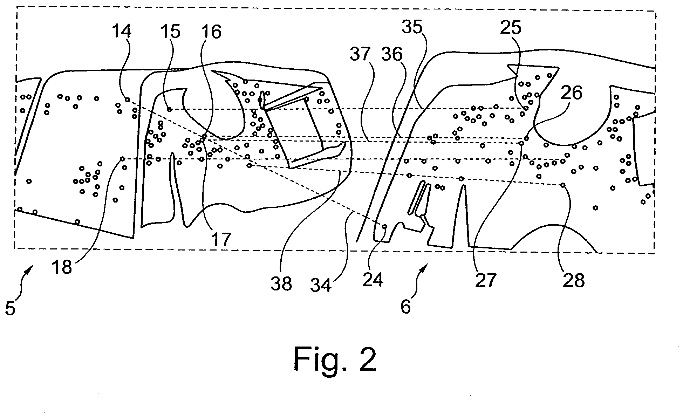

Fig. 2 zeigt ein anderes Objekt, vom dem eine erste Aufnahme 5 aus einer bestimmten Perspektive und eine zweite Aufnahme 6 aus einer anderen Perspektive dargestellt ist. Die von den Aufnahmen 5, 6 erfaßten Bereiche des Objekts überlappen sich teilweise.

Auf der Aufnahme 5 ist eine Vielzahl der bestimmten 2D-Feature-Punkte wiedergegeben, unter anderem die 2D-Feature-Punkte 14, 15, 16, 17, 18. Auf der Aufnahme 6 sind aus der Vielzahl der 2D-Feature-Punkte die 2D-Feature-Punkte 24, 25, 26, 27, 28 bezeichnet.

Die 2D-Punktkorrespondenzen 34, 35, 36, 37, 38 bestehen jeweils zwischen den 2D-Feature-Punkten 14, 24; 15, 25; 16, 26; 17, 27 und 18, 28.

Drei dieser 2D-Punktkorrespondenzen werden zufällig ausgewählt. Aus diesen drei 2D-Punktkorrespondenzen wird eine zugehörige 3D-Transformation bestimmt. Anschließend wird die Qualität dieser 3D-Transformation anhand der transformierten 3D-Koordinaten der 2D-Feature-Punkte bestimmt. Wenn diese Qualität ausreichend ist, werden aus ihr gültige 3D-Feature-Punkte ermittelt, deren 3D-Koordinaten für die Zusammensetzung der Kamerabilder, die zu den Aufnahmen 5, 6 gehören, verwendet werden. Andernfalls werden drei andere 2D-Punktkorrespondenzen ausgewählt, eine zugehörige 3D-Transformation bestimmt und deren Qualität bestimmt. Dieser Vorgang kann so lange mit jeweils anderen drei 2D-Punktkorrespondenzen wiederholt werden, bis eine gültige 3D-Transformation erhalten worden ist.

Fig. 3A und 3B zeigt ein Ablaufdiagramm des Verfahrens zur 3D-Digitalisierung eines Objekts.

In einem ersten Schritt 41 wird eine 3D-Messung der Oberfläche des Objekts durchgeführt. Bei dieser 3D-Messung werden zur Ermittlung der 3D-Koordinaten des Objekts eines oder mehrere Kamerabilder des Objekts aufgenommen. Das oder die Kamerabilder werden aus einer bestimmten Perspektive aufgenommen. Von dem oder den Kamerabildern wird ein Teil des Objekts aufgenommen. Es handelt sich um eines oder mehrere Kamerabilder, aus denen die 3D-Koordinaten des Objekts bestimmt werden können.

Im Schritt 42 werden das oder die Kamerabilder maskiert. Es findet eine Beseitigung der unnützen Hintergrundinformation statt. In diesem Schritt wird der Objektbereich des oder der Kamerabilder bestimmt.

Im Schritt 43 werden 2D-Feature-Punkte berechnet.

Im Schritt 44 werden die zugehörigen 3D-Koordinaten der 2D-Feature-Punkte bestimmt.

Im Schritt 44' wird die Feature-Punkt-Liste abgespeichert. Die Feature-Punkt-Liste enthält alle berechneten 2D-Feature-Punkte und die 3D-Koordinaten aller 2D-Feature-Punkte.

Die Schritte 41 bis 44' werden anschließend mit einer anderen Perspektive der Kamera wiederholt. In dieser Kameraperspektive wird ein anderer Teilbereich des Objekts erfaßt, der sich mit dem bereits erfaßten Teilbereich des Objekts teilweise überlappt.

Anschließend wird der Schritt 45 (Fig. 3B) durchgeführt. Die Feature-Punkt-Liste der aktuellen Aufnahme, also zunächst der zweiten Aufnahme, wird als Liste A verwendet.

Im anschließenden Schritt 46 wird die Feature-Punkt-Liste aus allen Feature-Punkten vorheriger Aufnahmen gebildet oder aus einem Speicher abgerufen und als Liste B verwendet.

Im Schritt 47 werden die 2D-Punktkorrespondenzen zwischen der Liste A und der Liste B bestimmt. Diejenigen Punkte der Liste A und der Liste B, für die 2D-Punktkorrespondenzen existieren, werden als Listen A' und Listen B' gebildet und gegebenenfalls abgespeichert. Die Anzahl /A'/ der Punkte in der Liste A' ist gleich der Anzahl /B'/ der Punkte in der Liste B'.

Im Schritt 48 wird überprüft, ob die Anzahl der Punkte in den Listen A' und B' mindestens drei beträgt. Wenn dies nicht der Fall ist, wird im Schritt 54 festgestellt, daß keine automatische Bestimmung der Vorausrichtung möglich ist. In diesem Fall kann aus den 2D-Punktkorrespondenzen keine zugehörige 3D-Transformation bestimmt werden.

Wenn die Anzahl der Punkte in den Listen A' und B' mindestens drei beträgt, wird nach dem Überprüfungsschritt 48 der Schritt 49 durchgeführt. Im Schritt 49 findet eine zufällige Auswahl von drei Feature-Punkten aus der Liste A' statt. Zu diesen drei Feature-Punkten gehören drei 2D-Punktkorrespondenzen, aus denen eine zugehörige 3D-Transformation bestimmt wird. Auf der Grundlage dieser 3D-Transformation werden die transformierten 3D-Koordinaten der 2D-Feature-Punkte bestimmt. Die 3D-Transformation bildet die zugehörigen 3D-Positionen der ausgewählten 2D-Featurepunkte aus der Liste A' auf ihre Korrespondenzen in der Liste B' ab.

Im Schritt 50 wird die Qualität der gefundenen 3D-Transformation bestimmt. Dies geschieht anhand der Auswertung der 3D-Klaffungen der transformierten 3D-Koordinaten, also des transformierten Datensatzes zu den vorherigen Datensätzen.

Im Schritt 51 wird geprüft, ob diese Qualität ausreichend ist. Wenn dies der Fall ist, wird im Schritt 52 festgestellt, daß eine gültige Vorausrichtung gefunden worden ist. Die ermittelte 3D-Transformation kann dazu verwendet werden, die Kamerabilder zusammenzusetzen, insbesondere durch ein 3D-Matching-Verfahren.

Danach kann mit dem Schritt 41 (Fig. 3A) fortgefahren werden.

Andernfalls, wenn im Schritt 51 festgestellt wurde, daß die Qualität der 3D-Transformation nicht ausreichend ist, wird im Schritt 53 geprüft, ob die maximale Anzahl der Versuche erreicht ist. Wenn dies nicht der Fall ist, wird erneut der Schritt 49 durchgeführt, in dem eine zufällige Auswahl von drei anderen Feature-Punkten erfolgt.

Andernfalls, wenn die maximale Anzahl der Versuche erreicht ist, wird im Schritt 54 festgestellt, daß eine automatische Bestimmung der Vorausrichtung nicht möglich ist.

Durch die Erfindung werden ein Verfahren und eine Vorrichtung geschaffen, bei denen das 3D-Matching der Kamerabilder automatisch ablaufen kann und eine Benutzerinteraktion überflüssig wird. Die Erfindung kann ferner in der Weise realisiert werden, daß eine Benutzerinteraktion zumindest deutlich reduziert wird. Insbesondere kann das Verfahren in der Weise ablaufen, daß bei jeder Objektansicht eines 3D-Scanners eines oder mehrere zusätzliche Aufnahmen des Objekts gemacht werden. Hierzu kann die Kamera des 3D-Sensors verwendet werden. Zusätzlich zu den für die Objektdigitalisierung notwendigen Streifenbild-Kamerabildern können eines oder mehrere zusätzliche Aufnahmen ohne Streifenbeleuchtung gemacht werden. Aus diesen Aufnahmen können die 2D-Feature-Punkte des Objekts berechnet werden. Als Feature-Punkte können insbesondere markante Punkte des Objekts wie beispielsweise Geometriekanten oder Kontrastkanten verwendet werden.

Im allgemeinen ist die Qualität der 3D-Transformation besser, wenn die Objektansicht nicht zu stark variiert wird. Wenn keine gültige 3D-Transformation bestimmt werden kann, kann das Verfahren erneut mit einer weniger starken Variation der Objektansicht durchgeführt werden, um auf diese Weise eine gültige 3D-Transformation zu erhalten. Stattdessen oder zusätzlich kann das Verfahren mit einer größeren Überlappung des Sichtbarkeitsbereichs zwischen verschiedenen Objektansichten durchgeführt werden.

Wenn die Qualität der 3D-Transformation nicht ausreicht ist es ferner möglich, eine Vorausrichtung manuell durch Markierung von Geometriekorrespondenzen durchzuführen.

Die 2D-Feature-Punkte können aus Aufnahmen bestimmt werden, die von der Kamera gemacht werden, die auch die Kamerabilder zur Ermittlung der 3D-Koordinaten des Objekts herstellt. Es ist allerdings auch möglich, die 2D-Feature-Punkte aus Aufnahmen einer separaten Kamera zu bestimmen. Mit der separaten Kamera kann vor oder nach der 3D-Digitalisierung eine Serie von Aufnahmen des Objekts hergestellt werden, und die 2D-Feature-Punkte des Objekts können aus diesen Aufnahmen berechnet werden. Die auf diese Weise gewonnene Feature-Punkt-Liste kann anschließend verwendet werden. Sie kann vor dem Start der 3D-Digitalisierung in das Meßprogramm geladen werden.

Es ist möglich, die Sensorposition und das Meßvolumen im 3D-Raum live anzuzeigen. Die ermittelten Feature-Punkte können verwendet werden, um die Sensorposition relativ zum Objekt festzustellen. Mit dieser Information kann die Lage des Sensormeßvolumens in Bezug zum Meßobjekt in der Datenerfassungssoftware in Echtzeit visualisiert werden, um dem Bediener visuelle Hilfestellung bei der Objekt- und/oder Sensorpositionierung zu geben. Dies kann insbesondere mit einer groben, schnellen 3D-Vorabmessung geschehen.

## Patentansprüche

1. Verfahren zur 3D-Digitalisierung eines Objekts, bei dem
a) ein Lichtmuster auf das Objekt (1) projiziert wird,
b) zur Ermittlung der 3D-Koordinaten des Objekts (1) aus verschiedenen Perspektiven mehrere Kamerabilder des Objekts (1), die sich teilweise überlappen, aufgenommen und zusammengesetzt werden,
c) von dem Objekt (1) Aufnahmen (5, 6) gemacht werden, aus denen 2D-Feature-Punkte (11, 12, 13; 21, 22, 23; 14, 15, 16, 17, 18; 24, 25, 26, 27, 28) des Objekts (1) bestimmt werden,
d) wobei als 2D-Feature-Punkte Ecken des Objekts (1), markante Punkte des Objekts und/oder Punkte in der Aufnahme verwendet werden, die eine charakteristische Umgebung haben,
e) die 3D-Koordinaten der 2D-Feature-Punkte aus Kamerabildern des Objekts, die zur Ermittlung der 3D-Koordinaten des Objekts dienen, bestimmt werden,
f) die 2D-Punktkorrespondenzen (31, 32, 33; 34, 35, 36, 37, 38) zwischen den 2D-Feature-Punkten einer Aufnahme und den 2D-Feature-Punkten einer anderen Aufnahme bestimmt werden,
g) mehrere dieser 2D-Punktkorrespondenzen ausgewählt werden und aus den 3D-Koordinaten der 2D-Feature-Punkte der ausgewählten 2D-Punktkorrespondenzen eine zugehörige 3D-Transformation bestimmt wird,
h) aus dieser 3D-Transformation die transformierten 3D-Koordinaten der 2D-Feature-Punkte bestimmt werden,
i) die Qualität dieser 3D-Transformation anhand der 3D-Koordinaten der 2D-Feature-Punkte und der transformierten 3D-Koordinaten der 2D-Feature-Punkte bestimmt und daraus gültige 3D-Feature-Punkte ermittelt werden
j) und für die Zusammensetzung der Kamerabilder des Objekts die 3D-Koordinaten der gültigen 3D-Feature-Punkte verwendet werden,
wobei zur Ermittlung der 3D-Koordinaten des Objekts (1) Kamerabilder mit einem Lichtmuster aufgenommen werden und wobei zur Bestimmung der 2D-Feature-Punkte des Objekts (1) Aufnahmen ohne Lichtmuster gemacht werden.

2. Verfahren nach Anspruch 1, wobei in jeder Aufnahme (5, 6) ein Objektbereich bestimmt wird und daß 2D-Feature-Punkte (14, 15, 16, 17, 18; 24, 25, 26, 27, 28) innerhalb des Objektbereichs verwendet werden.

3. Verfahren nach Anspruch 1 oder 2, wobei gespeicherte 2D-Feature-Punkte und/oder gespeicherte 3D-Feature-Punkte und/oder gespeicherte Merkmalsvektoren verwendet werden.

4. Verfahren nach einem der vorhergehenden Ansprüche, wobei die 2D-Feature-Punkte und/oder die 3D-Feature-Punkte und/oder die Merkmalsvektoren aus Renderings der CAD-Daten des Objekts ermittelt werden.

5. Verfahren nach einem der vorhergehenden Ansprüche, wobei 2D-Feature-Punkte und/oder 3D-Feature-Punkte und/oder Merkmalsvektoren verwendet werden, die aus Renderings der CAD-Daten des Objekts ermittelt wurden.

6. Vorrichtung zur Durchführung eines Verfahrens zur 3D-Digitalisierung eines Objekts mit
einer oder mehreren Kameras zur Aufnahme von Kamerabildern des Objekts aus verschiedenen Perspektiven, wobei sich die Kamerabilder teilweise überlappen,
einer Einrichtung, die ausgebildet ist zum Zusammensetzen der Kamerabilder des Objekts und zum Ermitteln der 3D-Koordinaten des Objekts,
einer Kamera zum Herstellen von Aufnahmen des Objekts
und einer Einrichtung, die ausgebildet ist zum Bestimmen von 2D-Feature-Punkten des Objekts, zum Bestimmen der 3D-Koordinaten der 2D-Feature-Punkte des Objekts, zum Bestimmen der 2D-Punktkorrespondenzen zwischen den 2D-Feature-Punkten einer Aufnahme und den 2D-Feature-Punkten einer anderen Aufnahme, zum Auswählen mehrerer dieser 2D-Punktkorrespondenzen, zum Bestimmen einer zugehörigen 3D-Transformation aus den 3D-Koordinaten der 2D-Feature-Punkte der ausgewählten 2D-Punktkorrespondenzen, zum Bestimmen der transformierten 3D-Koordinaten der 2D-Feature-Punkte aus dieser 3D-Transformation, zum Bestimmen der Qualität dieser 3D-Transformation anhand der 3D-Koordinaten der 2D-Feature-Punkte und der transformierten 3D-Koordinaten der 2D-Feature-Punkte und zum Ermitteln gültiger 3D-Feature-Punkte, und mit einem Projektor zum Projizieren eines Lichtmusters auf das Objekt, wobei die Einrichtung ausgebildet ist, zur Ermittlung der 3D-Koordinaten des Objekts Kamerabilder mit einem Lichtmuster aufzunehmen, und zur Ermittlung der 2D-Feature-Punkte des Objekts Aufnahmen ohne Lichtmuster zu machen,
wobei als 2D-Feature-Punkte Ecken des Objekts, markante Punkte des Objekts und/oder Punkte in der Aufnahme verwendet werden, die eine charakteristische Umgebung haben.

7. Vorrichtung nach Anspruch 6, wobei die Einrichtung geeignet ist, in jeder Aufnahme einen Objektbereich zu bestimmen und 2D-Feature-Punkte innerhalb des Objektbereichs zu verwenden.

8. Vorrichtung nach Anspruch 6 oder 7, mit einem Speicher zum Speichern der 2D-Feature-Punkte und/oder der 3D-Feature-Punkte und/oder der Merkmalsvektoren.

9. Vorrichtung nach einem der Ansprüche 6 bis 8, wobei die Einrichtung zum Ermitteln der 2D-Feature-Punkte und/oder der 3D-Feature-Punkte und/oder der Merkmalsvektoren aus Renderings der CAD-Daten des Objekts geeignet ist.

## Claims

1. Method for the 3D digitization of an object, wherein
a) a light pattern is projected onto the object (1),
b) a plurality of camera images of the object (1), which partly overlap, are recorded from different perspectives and composed for the purposes of establishing the 3D coordinates of the object (1),
c) recordings (5, 6) are made of the object (1), 2D feature points (11, 12, 13; 21, 22, 23; 14, 15, 16, 17, 18; 24, 25, 26, 27, 28) of the object (1) being determined from said recordings,
d) wherein corners of the object (1), prominent points of the object and/or points in the recording, which have characteristic surroundings, are used as 2D feature points,
e) the 3D coordinates of the 2D feature points are determined from camera images of the object which serve to establish the 3D coordinates of the object,
f) the 2D point correspondences (31, 32, 33; 34, 35, 36, 37, 38) between the 2D feature points of one recording and the 2D feature points of another recording are determined,
g) a plurality of these 2D point correspondences are selected and an associated 3D transformation is determined from the 3D coordinates of the 2D feature points of the selected 2D point correspondences,
h) the transformed 3D coordinates of the 2D feature points are determined from this 3D transformation,
i) the quality of this 3D transformation is determined on the basis of the 3D coordinates of the 2D feature points and the transformed 3D coordinates of the 2D feature points, and valid 3D feature points are established therefrom,
j) and the 3D coordinates of the valid 3D feature points are used for composing the camera images of the object, wherein camera images with a light pattern are recorded for establishing the 3D coordinates of the object (1) and wherein recordings without light patterns are made for determining the 2D feature points of the object (1) .

2. Method according to Claim 1, wherein an object region is determined in each recording (5, 6) and wherein 2D feature points (14, 15, 16, 17, 18; 24, 25, 26, 27, 28) are used within the object region.

3. Method according to Claim 1 or 2, wherein stored 2D feature points and/or stored 3D feature points and/or stored feature vectors are used.

4. Method according to any one of the preceding claims, wherein the 2D feature points and/or the 3D feature points and/or the feature vectors are established from renderings of the CAD data of the object.

5. Method according to any one of the preceding claims, wherein 2D feature points and/or 3D feature points and/or feature vectors are used, which were established from renderings of the CAD data of the object.

6. Apparatus for carrying out a method for 3D digitization of an object, having
one or more cameras for recording camera images of the object from different perspectives, wherein the camera images partly overlap,
a device embodied for composing the camera images of the object and for establishing the 3D coordinates of the object,
a camera for producing recordings of the object, and a device, which is embodied to determine 2D feature points of the object, determine the 3D coordinates of the 2D feature points of the object, determine the 2D point correspondences between the 2D feature points of a recording and the 2D feature points of another recording, select a plurality of these 2D point correspondences, determine an associated 3D transformation from the 3D coordinates of the 2D feature points of the selected 2D point correspondences, determine the transformed 3D coordinates of the 2D feature points from this 3D transformation, determine the quality of this 3D transformation on the basis of the 3D coordinates of the 2D feature points and the transformed 3D coordinates of the 2D feature points, and establish valid 3D feature points,
and having a projector for projecting a light pattern onto the object,
wherein the device is embodied to record camera images with a light pattern for establishing the 3D coordinates of the object and make recordings without light patterns for establishing the 2D feature points of the object,
wherein corners of the object, prominent points of the object and/or points in the recording, which have characteristic surroundings, are used as 2D feature points.

7. Apparatus according to Claim 6, wherein the device is suitable for determining an object region in each recording and for using 2D feature points within the object region.

8. Apparatus according to Claim 6 or 7, having a memory for storing the 2D feature points and/or the 3D feature points and/or the feature vectors.

9. Apparatus according to any one of Claims 6 to 8, wherein the device is suitable for establishing the 2D feature points and/or the 3D feature points and/or the feature vectors from renderings of the CAD data of the object.

## Revendications

1. Procédé destiné à la numérisation 3D d'un objet, dans lequel
a) un motif lumineux est projeté sur l'objet (1),
b) pour déterminer les coordonnées 3D de l'objet (1) à partir de différentes perspectives, plusieurs images de caméra de l'objet (1), qui se chevauchent partiellement, sont acquises et assemblées,
c) des acquisitions (5, 6) de l'objet (1) sont effectuées, à partir desquelles des points caractéristiques 2D (11, 12, 13 ; 21, 22, 23 ; 14, 15, 16, 17, 18 ; 24, 25, 26, 27, 28) de l'objet (1) sont déterminés,
d) dans lequel des coins de l'objet (1), des points saillants de l'objet et/ou des points de l'acquisition ayant un environnement caractéristique sont utilisés en tant que points caractéristiques 2D,
e) les coordonnées 3D des points caractéristiques 2D sont déterminées à partir d'images de caméra de l'objet qui sont utilisées pour déterminer les coordonnées 3D de l'objet,
f) les correspondances de points 2D (31, 32, 33 ; 34, 35, 35, 36, 37, 38) entre les points 2D d'une acquisition et les points 2D d'une autre acquisition sont déterminées,
g) plusieurs desdites correspondances de points 2D sont sélectionnées et une transformation 3D associée est déterminée à partir des coordonnées 3D des points caractéristiques 2D des correspondances de points 2D sélectionnées,
h) les coordonnées 3D transformées des points caractéristiques 2D sont déterminées à partir de ladite transformation 3D,
i) la qualité de ladite transformation 3D est déterminée sur la base des coordonnées 3D des points caractéristiques 2D et des coordonnées 3D transformées des points caractéristiques 2D, et des points caractéristiques 3D valides sont déterminées à partir de celle-ci,
j) et les coordonnées 3D des points caractéristiques 3D valides sont utilisées pour la composition des images de caméra de l'objet,
dans lequel des images de caméra sont acquises avec un motif lumineux pour déterminer les coordonnées 3D de l'objet (1)
et dans lequel des images sont acquises sans motif lumineux pour déterminer les points caractéristiques 2D de l'objet (1).

2. Procédé selon la revendication 1, dans lequel une zone d'objet est déterminée dans chaque acquisition (5, 6) et des points caractéristiques 2D (14, 15, 16, 17, 18 ; 24, 25, 26, 27, 28) sont utilisés dans la zone d'objet.

3. Procédé selon la revendication 1 ou 2, dans lequel des points caractéristiques 2D stockés et/ou des points caractéristiques 3D stockés et/ou des vecteurs de caractéristiques stockés sont utilisés.

4. Procédé selon l'une des revendications précédentes, dans lequel les points caractéristiques 2D et/ou les points caractéristiques 3D et/ou les vecteurs de caractéristiques sont déterminés à partir de rendus des données CAD de l'objet.

5. Procédé selon l'une des revendications précédentes, dans lequel des points caractéristiques 2D et/ou des points caractéristiques 3D et/ou des vecteurs de caractéristiques ayant été déterminés à partir de rendus des données CAD de l'objet sont utilisés.

6. Dispositif destiné à la mise en oeuvre d'un procédé de numérisation 3D d'un objet, comportant une ou plusieurs caméras destinées à acquérir des images de caméra de l'objet sous différentes perspectives, dans lequel les images de caméra se chevauchent partiellement,
un dispositif conçu pour assembler les images de caméra de l'objet et pour déterminer les coordonnées 3D de l'objet,
une caméra destinée à effectuer des acquisitions de l'objet,
et un dispositif qui est conçu pour déterminer des points caractéristiques 2D de l'objet, pour déterminer les coordonnées 3D des points caractéristiques 2D de l'objet, pour déterminer les correspondances de points 2D entre les points 2D d'une acquisition et les points 2D d'une autre acquisition, pour sélectionner plusieurs desdites correspondances de points 2D, pour déterminer une transformation 3D associée à partir des coordonnées 3D des points caractéristiques 2D des correspondances 2D de points 2D sélectionnées,
pour déterminer les coordonnées 3D transformées des points caractéristiques 2D à partir de ladite transformation 3D, pour déterminer la qualité de ladite transformation 3D sur la base des coordonnées 3D des points caractéristiques 2D et des coordonnées 3D transformées des points caractéristiques 2D ; et pour déterminer des points caractéristiques 3D valides,
et comportant un projecteur destiné à projeter un motif lumineux sur l'objet,
dans lequel le dispositif est conçu pour effectuer des acquisitions d'images de caméra avec un motif lumineux pour déterminer les coordonnées 3D de l'objet et pour effectuer des acquisitions sans motif lumineux pour déterminer les points caractéristiques 2D de l'objet, dans lequel des coins de l'objet, des points saillants de l'objet et/ou des points de l'acquisition qui ont un environnement caractéristique sont utilisés en tant que points caractéristiques 2D.

7. Dispositif selon la revendication 6, dans lequel le dispositif est approprié pour déterminer une zone d'objet dans chaque acquisition et pour utiliser des points caractéristiques 2D dans la zone d'objet.

8. Dispositif selon la revendication 6 ou 7, comportant une mémoire destinée à stocker les points caractéristiques 2D et/ou les points caractéristiques 3D et/ou les vecteurs de caractéristiques.

9. Dispositif selon l'une quelconque des revendications 6 à 8, dans lequel le dispositif est approprié pour déterminer les points caractéristiques 2D et/ou les points caractéristiques 3D et/ou les vecteurs de caractéristiques à partir de rendus des données CAD de l'objet.
